# EUROPÄISCHE PATENTANMELDUNG

(11) **EP 4 631 673 A1**
(43) Veröffentlichungstag der Anmeldung: **15.10.2025**
(21) Anmeldenummer: 25166744.0
(22) Anmeldetag: 27.03.2025
(51) Int. Cl.: B24B 19/16

(54) **VORRICHTUNG ZUM ANSCHLEIFEN VON RUNDSTÄBEN**

(30) Priorität: 28.03.2024 DE 202024101559 U
(71) Anmelder: Manohr Schweisstechnik GmbH, 15537 Grünheide OT Fangschleuse (DE)
(72) Erfinder: MANOHR, Uwe, 15537 Grünheide OT Fangschleuse (DE)
(74) Vertreter: Maucher Jenkins Patent- und Rechtsanwälte

(57) **Zusammenfassung**

Die Erfindung betrifft eine Vorrichtung zum Anschleifen von Rundstäben (13), bestehend aus einem Schleifgerät und einem separaten Halter (3) zur Aufnahme eines mit einem Ende aus dem Halter (3) herausragenden anzuschleifenden Rundstabs (13), wobei das Schleifgerät eine Antriebskomponente (1) und eine Werkzeugkomponente (2) umfasst. In die Werkzeugkomponente (2) ragt eine rotatorisch getriebene Antriebswelle (4) hinein, an deren freien Ende eine Schleifscheibe (5) montiert ist, wobei an einem diese umgebenden Gehäuse ein Zuführungskanal (11) ausgebildet ist, über den ein anzuschleifender Rundstab (13) in die Werkzeugkomponente (2) einzuführen mit der Schleifscheibe (5) in Kontakt zu bringen ist. Die Schleifscheibe (5) ist an dem freien Ende der, zumindest in einem Bereich dieses Endes, einen mehrkantförmigen Querschnitt aufweisenden Antriebswelle (4) auf einem elastischen Druckelement (8) gelagert, welches sich auf einer zwischen der Schleifscheibe (5) und der Antriebskomponente (1) an der Antriebswelle (4) ausgebildeten, sich orthogonal zu deren Längsachse (6) erstreckenden Abstützfläche (9) abstützt und die Schleifscheibe (5) gegen einen mechanischen Anschlag (10) drückt.

## Beschreibung

Die Erfindung betrifft eine Vorrichtung, welche zum Anschleifen von Rundstäben, nämlich von vorzugsweise Wolframschweißelektroden, vorgesehen ist. Soweit die Darstellung der Erfindung nachfolgend im Wesentlichen im Hinblick auf den vorgesehenen Haupteinsatzzweck des Anschleifens von Schweißelektroden erfolgt, soll jedoch hierdurch keine Beschränkung der beanspruchten Vorrichtung gegeben sein. So kann die Vorrichtung ohne Veränderung ihrer beanspruchten Merkmale, bei entsprechender Anpassung, beispielsweise auch für das Anschleifen von Bohrern und dergleichen zum Einsatz kommen.

Beim sogenannten WIG-Schweißen (Wolfram-Inertgas-Schweißen) und beim Plasmaschweißen werden Wolframschweißelektroden verwendet, welche für den Erhalt von Schweißnähten höchster Qualität eine definierte Spitze aufweisen müssen. Dabei sind sowohl die Abmessungen als auch die Oberflächenbeschaffenheit der Elektrodenspitze von besonderer Bedeutung für die Ausbildung des von den Elektroden erzeugten Lichtbogens, mittels welchem der zur Herstellung der Schweißnaht verwendete Schweißdraht aufgeschmolzen wird. Auf der anderen Seite ist die Elektrodenspitze durch die beim Schweißvorgang auftretenden Temperaturen einem hohen Verschleiß ausgesetzt, so dass sie bereits nach kurzer Zeit das Herstellen hochwertiger Schweißnähte nicht mehr ermöglicht. In der Praxis verhält es sich daher vielfach so, dass der Schweißer eine Vielzahl von Schweißelektroden bei sich führt, um diese am Schweißgerät häufiger auswechseln zu können.

Eine andere Möglichkeit besteht darin, die Elektroden neu anzuschleifen, jedoch muss hierzu vor Ort eine entsprechende Schleifmaschine zur Verfügung stehen. Zwischenzeitlich sind daher auch mobile Geräte oder zumindest ohne größeren Aufwand umsetzbare, mit einer Werkbank nutzbare Tischgeräte auf dem Markt verfügbar. Bei Geräten dieser Art, ist ein Motorgehäuse respektive eine Antriebskomponente mit einer Werkzeugkomponente verbunden, in welcher die auf einer Motorwelle montierte Schleifscheibe angeordnet ist. Zum Anschleifen werden die Elektroden über eine Öffnung im Gehäuse der Werkzeugkomponente mit der Schleifscheibe in Berührung gebracht.

Um unterschiedliche Schleifwinkel an Elektroden verschiedenen Durchmessers erzeugen zu können, sind bei einfachen Geräten mehrere, im Hinblick auf die Durchtrittsrichtung und den Durchmesser, unterschiedliche Bohrungen im Gehäuse des Schleifaufsatzes vorgesehen. Dies ist jedoch nicht sehr komfortabel und ermöglicht zudem nur das Anschleifen ausgewählter Elektrodendurchmesser für zwar unterschiedliche, aber fest vorgegebene Winkel mit einer zudem durch eventuelles Spiel sowie das Schwingen der nur von Hand gehaltenen Elektrode großen Winkelabweichung. Außerdem ist es für den Benutzer vergleichsweise schwierig, an einer von ihm lediglich mit der Hand gehaltenen und beim Anschleifen merklich schwingenden Elektrode unter ständiger Drehung derselben eine gleichmäßige Spitze zu erzeugen.

Aus der EP 1 262 279 A2 ist eine Vorrichtung zum Anschleifen von Rundstäben, vorzugsweise von Wolframschweißelektroden bekannt, welche hierfür eine Lösung bietet. Die Vorrichtung ermöglicht vor Ort, also insbesondere dort, wo Schweißelektroden für das Wolfram-Inertgas-Schweißen zum Einsatz gelangen, ein einfaches, aber sehr genaues Einstellen sowohl des Anschleifwinkels als auch der von dem Rundstab respektive der Schweißelektrode abzuschleifenden Länge. Bei der in der Druckschrift beschriebenen Lösung handelt es sich um eine Vorrichtung mit einem mobilen Schleifgerät, welche aber auch auf relativ ortsfest eingesetzte Vorrichtungen, wie beispielsweise Vorrichtungen mit einem Tischschleifgerät, übertragbar ist.

Das jeweilige Schleifgerät besteht auch hierbei aus einem einen Antrieb aufnehmenden Motorgehäuse und einer daran befestigten Werkzeugkomponente, in welche eine von dem Antrieb rotatorisch angetriebene Antriebswelle hineinragt. An dem freien Ende der Antriebswelle ist eine Schleifscheibe befestigt, deren Arbeitsebene sich quer zur Längsachse der Antriebswelle erstreckt. Ein aus einem Halter herausragendes Ende einer Schweißelektrode ist über einen an dem Gehäuse der Werkzeugkomponente ausgebildeten Zuführungskanal zum Anschleifen mit der Arbeitsebene der Schleifscheibe in Kontakt zu bringen. Durch die Länge des Herausragens aus dem Halter wird dabei die Anschleiflänge der Schweißelektrode bestimmt, wobei diese Länge zuvor mit Hilfe einer Tiefenlehre entsprechend einstellbar ist. Der Zuführungskanal durchragt eine einen kreissegmentförmigen Durchbruch im Gehäuse der Werkzeugkomponente abdeckende Kulisse. Zur Festlegung des Anschleifwinkels für die anzuschleifende Schweißelektrode kann der Zuführungskanal in dem kreissegmentförmigen Durchbruch bewegt, nämlich um einen in der Arbeitsebene der Schleifscheibe liegenden Schwenkpunkt verschwenkt und in der für den gewünschten Anschleifwinkel richtigen Position am Gehäuse des Werkzeugaufsatzes arretiert werden.

Durch die DE 20 2012 105 053 U1 wird darüber hinaus eine spezielle Ausgestaltung der zuvor bereits angesprochenen, an dem Schleifgerät selbst ausgebildeten Tiefenlehre respektive einer als Teil dieser Tiefenlehre ausgebildeten Einstelleinrichtung beschrieben. Mit Hilfe eines Längennormals und eines Stellglieds kann dabei die Länge des aus dem Halter herausragenden Endes einer Schweißelektrode und damit deren Anschleiflänge sehr exakt eingestellt werden. Zum Anschleifen wird dann die hinsichtlich der Länge ihres Herausragens aus dem Halter eingestellte Schweißelektrode in den an der Werkzeugkomponente des Schleifgeräts ausgebildeten Zuführungskanal eingeführt, wobei dieser Zuführungskanal einen Anschlag aufweist, bis zu welchem der Halter mit der aus ihm herausragenden Schweißelektrode in den Zuführungskanal eingeführt werden kann, so dass die zuvor eingestellte Anschleiflänge nicht überschritten werden kann.

Allerdings ergibt sich hierbei, möglicherweise auch aufgrund eines entsprechenden, auf der Baustelle herrschenden Zeit- und Arbeitsdrucks, häufiger das Problem, dass das anzuschleifende Ende der Schweißelektrode mittels des Halters zu schnell bis zum Anschlagen des Halters in den Zuführungskanal eingeführt wird. Hierdurch leidet das Schleifergebnis an der Elektrode, wobei es sogar zu einer nachhaltigen Schädigung des Elektrodenmaterials durch Ausglühen kommen kann. Außerdem wird dadurch die Schleifscheibe sehr stark strapaziert, so dass sich deren Standzeit signifikant reduziert.

Aufgabe der Erfindung ist es, eine Lösung bereitzustellen, durch welche der vorgenannte Nachteil vermieden wird. Hierzu soll eine gattungsgemäße Schleifvorrichtung so ausgebildet werden, dass eine Beschädigung der Schweißelektrode und ein erhöhter Verschleiß an der Schleifscheibe auch dann vermieden werden, wenn durch eine die Schweißelektrode anschleifende Person beim Anschleifvorgang ein unverhältnismäßig hoher Druck über die Schweißelektrode auf die Schleifscheibe ausgeübt wird.

Die Aufgabe wird durch eine Schleifvorrichtung mit den Merkmalen des Patentanspruchs 1 gelöst. Vorteilhafte Aus- und Weiterbildungen der Erfindung sind durch die Unteransprüche gegeben.

Die zur Lösung der Aufgabe vorgeschlagene Vorrichtung zum Anschleifen von Rundstäben besteht aus einem Schleifgerät mit einer Antriebskomponente und einer mit der Antriebskomponente verbundenen Werkzeugkomponente und aus einem separaten Halter zur Aufnahme eines mit einem Ende aus dem Halter herausragenden anzuschleifenden Rundstabs. Durch ein Gehäuse der Werkzeugkomponente wird ein typischerweise elektrischer Antrieb aufgenommen. Eine von diesem Antrieb rotatorisch getriebene Antriebswelle ragt mit einer an ihrem freien Ende auswechselbar montierten Schleifscheibe in ein Gehäuse der Werkzeugkomponente hinein.

An dem die Schleifscheibe umgebenden Gehäuse der Werkzeugkomponente ist ein Zuführungskanal ausgebildet, über den ein anzuschleifender Rundstab in die Werkzeugkomponente einzuführen sowie mit der sich quer zur Längsachse des Antriebswelle erstreckenden Arbeitsebene der Schleifscheibe in Kontakt zu bringen ist. Der schon genannte Halter, mit dem aus ihm herausragende Ende des Rundstabs, ist in den Zuführungskanal bis zu einem an diesem für den Halter ausgebildeten Anschlag einzuführen. Hierdurch wird die Anschleiflänge für den Rundstab bestimmt. Vorzugsweise umfasst die Vorrichtung zudem eine Tiefenlehre zum Einstellen eines Maßes für das Herausragen des anzuschleifenden Rundstabs aus dem Halter und damit einer gewünschten Anschleiflänge für den Rundstab.

Bei der hier vorgeschlagenen Schleifeinrichtung weist die Antriebswelle zumindest an ihrem freien Ende, in einem Bereich, nämlich in dem Bereich, in welchem die Schleifscheibe auf die Antriebswelle montiert ist, einen mehrkantförmigen, vorzugsweise sechskantförmigen Querschnitt auf. Die beispielsweise auf ihrer Schleiffläche mit Diamant besetzte Schleifscheibe ist an diesem mehrkantförmigen freien Ende der Antriebswelle auf einem elastischen Druckelement beweglich, nämlich gewissermaßen schwimmend gelagert. Dieses elastische Druckelement stützt sich auf einer zwischen der Schleifscheibe und der Motorkomponente an der Antriebswelle ausgebildeten Abstützfläche ab, welche sich orthogonal zur Längsachse der Antriebswelle erstreckt. Durch das elastische Druckelement wird die Schleifscheibe auf ihrer der Abstützfläche abgewandten Seite gegen einen mechanischen Anschlag gedrückt. Hierdurch ist der Winkel, in welchem sich die Schleifscheibe respektive deren Arbeitsebene quer zu der Längsachse der Antriebswelle erstreckt, durch eine auf die Schleifscheibe über den mit ihr in Kontakt gebrachten anzuschleifenden Rundstab ausgeübte Kraft veränderlich.

Das heißt, sofern während des Anschleifvorgangs mittels des anzuschleifenden Rundstabs eine die Druckkraft des Druckelements übersteigende Kraft ausgeübt wird, bewegt sich die Schleifscheibe auf ihrer dem Rundstab respektive ihrer Arbeitsfläche abgewandten Seite der Längsachse der Antriebswelle entgegen, nimmt also ein Schrägstellung ein. Folglich weicht die Schleifscheibe gewissermaßen der auf sie durch die anzuschleifende Schweißelektrode eingetragenen Kraft aus. Hierdurch wird sowohl eine Beschädigung der Schweißelektrode im Bereich ihrer Spitze (zum Beispiel durch Ausglühen) als auch einer zu vorzeitigem Verschleiß führenden Beanspruchung der Schleifscheibe entgegengewirkt. Endet die Krafteinwirkung, wird also nicht mehr über einen anzuschleifenden Rundstab (insbesondere Schweißelektrode) Kraft auf die Schleifscheibe eine Druckkraft ausgeübt, wird die Schleifscheibe durch das Druckelement in ihre Ausgangslage und gegen den mechanischen Anschlag zurückgedrückt. Die Arbeitsebene der Schleifscheibe ist dann wieder orthogonal zur Längsachse der Antriebswelle ausgerichtet.

Soweit vorstehend ausgeführt worden ist, dass die Schleifscheibe mithilfe des sich auf der Abstützfläche abstützenden elastischen Druckelements beweglich gelagert ist, rekurriert dies insbesondere auf die der Schleifscheibe, bei einem höheren auf sie mittels eines anzuschleifenden Rundstabs ausgeübten Druck, ermöglichte Ausweichbewegung. Damit aber diese Ausweichbewegung, in deren Folge die nicht biegsame Schleifscheibe unweigerlich auch geringfügig gegen die Längsachse der Antriebswelle verkantet, möglich wird, ist ein im Zentrum der Schleifscheibe zum Durchführen der Antriebswelle ausgebildeter Durchbruch, bei ansonsten gleicher Form, geringfügig größer als die Querschnittsfläche der Antriebswelle ausgebildet.

Gleichzeitig weist die Antriebswelle, wie bereits ausgeführt, in dem Bereich ihres freien Endes, an dem die Schleifscheibe auf ihr montiert ist, einen mehrkantigen, vorzugsweise sechskantigen Querschnitt auf, um die Scheibe, trotz ihres gegenüber der Querschnittsfläche der Antriebswelle geringfügig größeren Durchbruchs, überhaupt mitnehmen zu können. Bei einer kreisförmigen Ausbildung des Durchbruchs in der Schleifscheibe und der Querschnittsfläche der Antriebswelle in dem den Durchbruch durchragenden Abschnitt wäre eine Mitnahme der Schleifscheibe, also die Vermittlung der Drehbewegung auf die Scheibe, nicht gewährleistet. Vielmehr würde die Schleifscheibe dann mit ihrem Durchbruch allenfalls nur langsam um die sich drehende Antriebswelle herumgleitengleiten.

Vorzugsweise, das heißt gemäß einer praxisgerechten Ausbildungsform, handelt es sich bei dem elastischen Druckelement, auf welchem die Schleifscheibe an dem freien Ende der Antriebswelle gelagert ist, um eine Feder, vorzugsweise um eine Spiraldruckfeder. Das Druckelement ist außerdem vorzugsweise auf der Antriebswelle unter Erzeugung einer Vorspannung in dem Druckelement befestigt. Hierzu kann die Schleifscheibe mittels einer auf ein Außengewinde am Ende der Antriebswelle aufgeschraubten Mutter an der Antriebswelle befestigt sein, wobei durch Anziehen dieser Mutter über die Schleifscheibe eine Kraft auf das zwischen der Schleifscheibe und der näher zur Antriebskomponente hin an der Antriebswelle ausgebildeten Abstützfläche angeordnete Druckelement ausgeübt wird, welche eine Vorspannung in der Druckfeder erzeugt. Die genannte Mutter kann hierbei gleichzeitig den mechanischen Anschlag ausbilden, gegen welchen die Schleifscheibe durch das elastische Druckelement gedrückt wird. Selbstverständlich ist die Antriebwelle in ihem mit dem Gewinde zum Aufschrauben der vorgenannten Mutter versehenen Abschnitt bezüglich ihrer Querschnittsfläche nicht mehrkantförmig respektive sechskantförmig ausgebildet.

Das Schleifgerät kann als ein mobiles Schleifgerät respektive als ein Handschleifgerät ausgebildet sein. Aber, unabhängig davon, ob es sich bei dem Schleifgerät um eine Handschleifgerät oder um ein Tischschleifgerät handelt, ist dieses gemäß einer besonders bevorzugten Weiterbildung so ausgebildet, dass der Zuführungskanal eine, einen kreissegmentförmigen Durchbruch im Gehäuse der Werkzeugkomponente abdeckende Kulisse durchragt. Zur Festlegung des insoweit veränderlichen Anschleifwinkels für den anzuschleifenden Rundstab ist dabei der Zuführungskanal in dem kreissegmentförmigen Durchbruch bewegbar und um einen in der Arbeitsebene der Schleifscheibe liegenden Schwenkpunkt verschwenkbar. Zudem ist der Zuführungskanal in einer entsprechend dem gewünschten Anschleifwinkel gewählten Position an dem Gehäuse der Werkzeugkomponente und somit zur Fixierung des eingestellten Anschleifwinkels gegen den respektive in dem kreissegmentförmigen Durchbruch arretierbar.

Die schon erwähnte Tiefenlehre ist vorzugsweise in Form eines in ein Gehäuseteil des Schleifgerätes eingebrachten, in seiner Tiefe veränderlichen Schachtes ausgebildet. Sie kann hierbei zudem in der durch DE 20 2012 105 053 U1 beschriebenen Weise ausgebildet sein.

Ein mögliches Ausführungsbeispiel der Erfindung soll nachfolgend anhand von Zeichnungen erläutert werden. Die Zeichnungen zeigen im Einzelnen:
- Fig. 1:: einen endseitigen Abschnitt einer Antriebswelle mit darauf montierter Schleifscheibe,
- Fig. 2:: eine Antriebswelle mit vergleichbar zur Fig. 1 montierter Schleifscheibe, als Teil einer möglichen Ausbildungsform der Vorrichtung insgesamt.

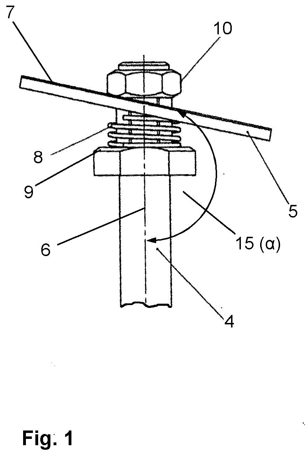

Die Fig. 1 zeigt beispielhaft einen endseitigen Abschnitt der Antriebswelle 4 eines Schleifgeräts mit der daran montierten Schleifscheibe 5 gemäß einer möglichen Ausbildungsform der Erfindung. Wie aus der Figur ersichtlich, ist die Schleifscheibe 5 an dem freien Ende einer Antriebswelle 4 auf einem (elastischen) Druckelement 8, in dem gezeigten Beispiel auf einer Spiraldruckfeder, gelagert. Dieses Druckelement 8 stützt sich an einer an dem Schaft respektive an der Antriebswelle 4 ausgebildeten Abstützfläche 9 ab. In dem Bereich, in welchem die Schleifscheibe auf der Antriebswelle montiert ist, weist die Welle - in der Zeichnung nur zu erahnen - einen sechskantförmigen Querschnitt auf.

Auf die Spiraldruckfeder (Druckelement 8) ist die Schleifscheibe 5 aufgesetzt und mittels einer auf ein ganz am Ende der Antriebswelle 4 ausgebildetes Außengewinde aufgeschraubten Sechskantmutter unter Ausübung einer Vorspannung auf das Druckelement 8 befestigt. Die vorgenannte Sechskantmutter bildet für die durch das Druckelement 8 gegen sie gedrückte Schleifscheibe 5 einen mechanischen Anschlag 10 aus

Aufgrund ihrer Lagerung auf der Spiraldruckfeder (dem Druckelement 8) ist der Winkel 15 (α), in welchem sich die Arbeitsebene 7 der Schleifscheibe 5 quer zu der Längsachse 6 der Antriebswelle 4 erstreckt, durch eine auf die Schleifscheibe 6 ausgeübte Kraft veränderlich. Eine solche Kraft, welche dazu führt, dass sich die bezüglich ihrer Arbeitsebene 7 ursprünglich orthogonal zu der Längsachse 6 der Antriebswelle 4 ausgerichtete Schleifscheibe 5 in die in der Figur beispielhaft gezeigte Schrägstellung bewegt, kann zum Beispiel beim Schleifvorgang über das dazu mit der Schleifscheibe 5 in Kontakt gebrachte Ende einer Schweißelektrode (Rundstab 13) ausgeübt werden. Die Schleifscheibe 5 gibt dieser über die anzuschleifende Schweißelektrode ausgeübten Kraft gewissermaßen nach, indem sie sich, wie in der Fig. 1 gezeigt, schräg stellt.

Hierdurch wird verhindert, dass die nunmehr noch verbleibende Druckkraft zu einem Ausglühen der anzuschleifenden Schweißelektrode (des Rundstabs 13) sowie zu einer übermäßig starken Beanspruchung der Schleifscheibe 5 auf ihrer Arbeitsoberfläche respektive Arbeitsebene 7 führt. Die mittels der oberen, als mechanischer Anschlag 10 wirkenden Sechskantmutter eingestellte Vorspannung für das Druckelement 8 respektive die Spiraldruckfeder legt dabei fest, wie stark die über eine anzuschleifende Schweißelektrode (Rundstab 13) auf die Schleifscheibe 5 ausgeübte Kraft gemindert wird.

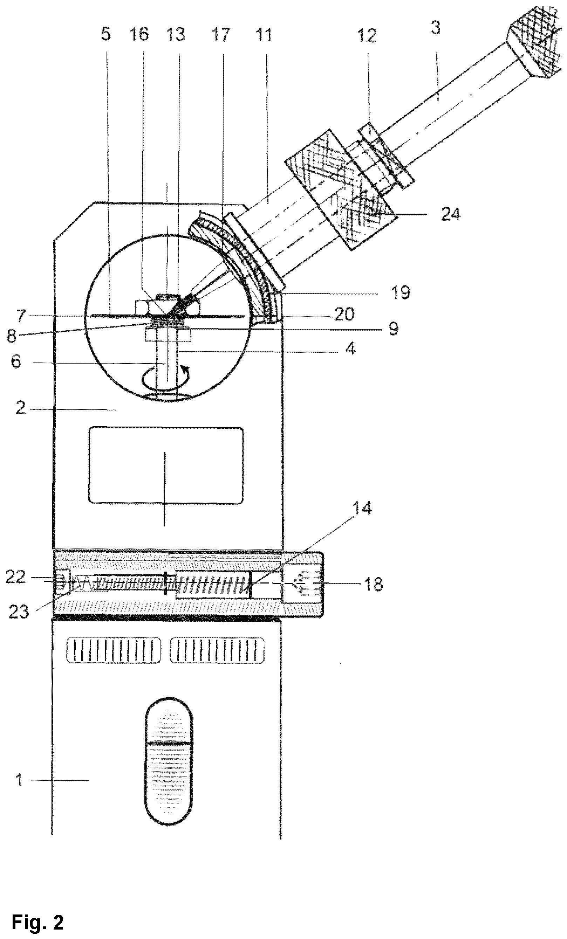

Die Fig. 2 zeigt eine mögliche Ausbildungsform der erfindungsgemäßen Schleifvorrichtung mit ihren wesentlichen Komponenten in nahezu vollständiger Darstellung. Die Figur zeigt wesentliche Teile der Vorrichtung, nämlich Teile des, in diesem Falle als Handschleifgerät ausgebildeten Schleifgerätes und des Halters 3 für die anzuschleifenden Schweißelektroden (Rundstäbe 13). Die in üblicher Weise ausgebildete Antriebskomponente 1 mit dem von ihr aufgenommenen, aber hier nicht sichtbaren Antrieb ist dabei nur teilweise gezeigt. Die Werkzeugkomponente 2 ist in einer teilweise, nämlich im Bereich einer Gehäuseeinführung der Werkzeugkomponente 2 für den Zuführungskanal 11 für die anzuschleifenden Schweißelektroden (Rundstäbe 13), geschnittenen Darstellung wiedergegeben.

Die Antriebswelle 4 ragt aus einem Gehäuse der Antriebskomponente 1 heraus und, wie zu erkennen, in ein Gehäuse Werkzeugkomponente 2 hinein. An ihrem axialen Ende ist die Schleifscheibe 5 in einem hier mit einem sechskantförmigen Querschnitt ausgebildeten Bereich montiert, wobei diese auf einem sich an einer Abstützfläche 9 abstützenden Druckelement 8, wie in Fig. 1 gezeigt und dazu erläutert, gelagert ist. Dass die zur Befestigung der Schleifscheibe 5 sowie zur Einstellung der Vorspannung für das Druckelement 8 dienende Sechskantmutter (mechanischer Anschlag 10 - siehe Fig. 1) und auch die Abstützfläche 9 gegenüber der Fig. 1 andere Abmaße aufweisen, also nicht maßstabsgleich zur Fig. 1 sind, ist dabei sowie für das grundsätzliche Lösungsprinzip ohne Belang.

Zum Anschleifen werden die Rundstäbe 13 (Schweißelektroden) über den Zuführungskanal 11 mit der Schleifscheibe 5 in Kontakt gebracht, wobei sie hierzu mittels des Halters 3 in den Zuführungskanal 11 eingeführt werden. Am Zuführungskanal 11 ist ein Anschlag 12 für den Halter 3 ausbildet. Die Spitze des bis zu diesem Anschlag 12 in den Zuführungskanal 11 einschiebbaren Halters 3 weist somit einen definierten Abstand zur Oberfläche beziehungsweise zur Arbeitsebene 7 der Schleifscheibe 5 auf. Folglich ist es nur noch erforderlich, die Länge des aus dem Halter 3 herausragenden Endes eines anzuschleifenden Rundstabes 13 am Halter 3 in definierter Weise einzustellen.

Dies geschieht mittels der im Bild erkennbaren Tiefenlehre 14. Der Rundstab 13 wird zu diesem Zweck zunächst lose in den Halter 3 eingelegt, so dass er in diesem axial verschieblich gehalten ist. Von dem Halter 3 aufgenommen, wird der Rundstab 11 in den zuvor mittels der Schraube 22 und einer Feder 23 hinsichtlich seiner Tiefe eingestellten, die Tiefenlehre 14 ausbildenden Schacht eingeführt. Hierbei trifft die Spitze des Rundstabes 13 auf dessen Boden, wo der Rundstab 13 bei weiterer Bewegung des Halters 3 gegen den Boden gedrückt und in den Halter 3 hineingeschoben wird.

Für den Halter 3 selbst bildet die Eingangs des Tiefenanschlages vorgesehene und in axialer Richtung hohle Innensechskantschraube 18 einen Anschlag aus. Dabei greift ein auf einer Spannzange des Halters 3 vorgesehener Außensechskant 17 in den Innensechskant 18 der Schraube ein. Durch Verdrehen des Halters 3 wird dessen äußere Hülse über Spannbacken der Spannzange geschoben, so dass diese hierdurch gespannt werden. Der Rundstab 13 wird auf diese Weise um die vorgesehene Länge aus dem Halter 3 herausragend, durch die Spannzange fixiert.

Aufgrund des für den Halter 3 am Zuführungskanal 11 vorgesehenen Anschlages 12 wird mit diesem Vorgang gleichzeitig die spätere Anschleiflänge der Schweißelektrode (des Rundstabs 13) festgelegt. Dabei wird durch die spezielle Lagerung der Schleifscheibe 5, nämlich durch deren Lagerung auf einem Druckelement 8, sowie durch das hierdurch ermöglichte "Ausweichen" der Schleifscheibe 5 ein zu hoher Krafteintrag verhindert, welcher zur Beschädigung der anzuschleifenden Schweißelektrode (Rundstab 13) und der Schleifscheibe 5 respektive zu einem vorzeitigen Verschleiß der Schleifscheibe 5 führen könnte,.

Zur Festlegung des Anschleifwinkels kann die von dem Zuführungskanal 11 durchragte Kulisse 19 innerhalb eines kreissegmentförmigen Durchbruchs 20 bewegt und in einer parallel zur Längsachse 6 der Antriebswelle 4 sowie senkrecht zur Arbeitsebene 7 der Schleifscheibe 5 verlaufenden Ebene um einen Schwenkpunkt 16 verschwenkt werden, welcher sich auf der Oberfläche respektive der Arbeitsebene 7 der Schleifscheibe 5, genauer gesagt, auf einem die Schwenkebene senkrecht schneidenden Radius befindet. Der Zuführungskanal 11 kann nach dem Einstellen des gewünschten Anschleifwinkels mit Hilfe eines Klemmstempels 24 an dem Gehäuse der Werkzeugkomponente 1 und somit gegen den Durchbruch 19 arretiert werden. Das eingestellte Maß für die Anschleiflänge bleibt unabhängig vom gewählten Anschleifwinkel konstant. Die Werkzeugkomponente 2 weist auf einer Seite ihres Gehäuses in Höhe der Schleifscheibe ein Schauglas zur Beobachtung des Anschleifvorgangs auf.

## Patentansprüche

1. Vorrichtung zum Anschleifen von Rundstäben (13), vorzugsweise von Wolframschweißelektroden, bestehend
- aus einem Schleifgerät mit einer Antriebskomponente (1) und einer mit der Antriebskomponente (1) verbundenen Werkzeugkomponente (2), wobei in die Werkzeugkomponente (2) eine durch einen von der Antriebskomponente (1) aufgenommenen Antrieb rotatorisch getriebene Antriebswelle (4) hineinragt, an deren freien Ende eine Schleifscheibe (5) montiert ist und wobei an einem die Schleifscheibe (5) umgebenden Gehäuse der Werkzeugkomponente (2) ein Zuführungskanal (11) ausgebildet ist, über den ein anzuschleifender Rundstab (13) in die Werkzeugkomponente (2) einzuführen sowie mit der sich quer zur Längsachse (6) der Antriebswelle (4) erstreckenden Arbeitsebene (7) der Schleifscheibe (5) in Kontakt zu bringen ist,
- aus einem separaten Halter (3) zur Aufnahme eines mit einem Ende aus dem Halter (3) herausragenden anzuschleifenden Rundstabs (13), wobei der Halter (3) mit dem aus ihm herausragenden Ende des Rundstabs (13) in den Zuführungskanal (11) bis zu einem an diesem für den Halter (3) ausgebildeten Anschlag (12) einzuführen und durch die Länge des aus dem Halter (3) herausragenden Endes des Rundstabs (13) für diesen eine Anschleiflänge bestimmt ist,
**dadurch gekennzeichnet, dass** die Schleifscheibe (5) an dem freien Ende der, zumindest in einem Bereich dieses Endes, einen mehrkantförmigen Querschnitt aufweisenden Antriebswelle (4) auf einem elastischen Druckelement (8) gelagert ist, welches sich auf einer zwischen der Schleifscheibe (5) und der Antriebskomponente (1) an der Antriebswelle (4) ausgebildeten, sich orthogonal zur Längsachse (6) der Antriebswelle (4) erstreckenden Abstützfläche (9) abstützt und die Schleifscheibe (5) auf ihrer der Abstützfläche (9) abgewandten Seite gegen einen mechanischen Anschlag (10) drückt, so dass ein Winkel α (15), in welchem sich die Arbeitsebene (7) der Schleifscheibe (5) quer zu der Längsachse (6) der Antriebswelle (4) erstreckt, durch eine auf die Schleifscheibe (5) über den mit ihr in Kontakt gebrachten anzuschleifenden Rundstab (13) ausgeübte Kraft veränderlich ist.

2. Vorrichtung nach Anspruch 1, **dadurch gekennzeichnet, dass** die Schleifscheibe (5) an dem freien Ende der Antriebswelle (4) auf einem als Feder ausgebildeten Druckelement (8) gelagert ist.

3. Vorrichtung nach Anspruch 2, **dadurch gekennzeichnet, dass** es sich bei der das Druckelement (8) ausbildenden Feder um eine Spiraldruckfeder handelt.

4. Vorrichtung nach einem der Ansprüche 1 bis 3, **dadurch gekennzeichnet, dass** die Schleifscheibe (5) auf der Antriebswelle (4), unter Erzeugung einer Vorspannung in dem Druckelement (8), mittels einer auf ein Außengewinde am Ende der Antriebswelle (4) aufgeschraubten Mutter gehalten ist.

5. Vorrichtung nach Anspruch 4, **dadurch gekennzeichnet, dass** die die Schleifscheibe (5) auf der Antriebswelle (4) haltende Mutter gleichzeitig den mechanischen Anschlag (10) ausbildet.

6. Vorrichtung nach einem der Ansprüche 1 bis 5, **dadurch gekennzeichnet, dass** das Schleifgerät mit der Antriebskomponente (1) und der Werkzeugkomponente (2) als ein mobiles Schleifgerät ausgebildet ist.

7. Vorrichtung nach einem der Ansprüche 1 bis 6, **dadurch gekennzeichnet, dass** der Zuführungskanal (11) eine einen kreissegmentförmigen Durchbruch (20) im Gehäuse der Werkzeugkomponente (2) abdeckende Kulisse (19) durchragt und zur Festlegung des Anschleifwinkels für den anzuschleifenden Rundstab (13) in dem kreissegmentförmigen Durchbruch (20) bewegbar und dabei um einen in der Arbeitsebene (7) der Schleifscheibe (5) liegenden Schwenkpunkt (16) verschwenkbar ist, wobei der Zuführungskanal (11) in einer entsprechend dem gewünschten Anschleifwinkel gewählten Position an dem Gehäuse der Werkzeugkomponente (2) und hierdurch gegen den kreissegmentförmigen Durchbruch (20) arretierbar ist.

8. Vorrichtung nach einem der Ansprüche 1 bis 7, **dadurch gekennzeichnet, dass** diese außerdem eine Tiefenlehre (14) zum Einstellen eines Maßes für das Herausragen des anzuschleifenden Rundstabs (13) aus dem Halter (3) und damit einer gewünschten Anschleiflänge für den Rundstab (13) umfasst.

9. Vorrichtung nach Anspruch 8, **dadurch gekennzeichnet, dass** die Tiefenlehre (14) in Form eines in ein Gehäuseteil des Schleifgerätes eingebrachten, in seiner Tiefe veränderlichen Schachtes ausgebildet ist.
